(19) Europäisches Patentamt

European Patent Office

Office européen des brevets

(11) EP 0 912 626 B1

(12) EUROPEAN PATENT SPECIFICATION

(45) Date of publication and mention
of the grant of the patent:
**21.03.2001 Bulletin 2001/12**

(51) Int Cl.[7]: **C08G 69/16**, C08G 69/18,
C08K 3/00, C08K 3/36,
C08K 3/34

(21) Application number: **97930886.3**

(22) Date of filing: **16.07.1997**

(86) International application number:
**PCT/NL97/00422**

(87) International publication number:
**WO 98/02481 (22.01.1998 Gazette 1998/03)**

(54) **PROCESS FOR THE MANUFACTURE OF A POLYAMIDE MOULDING**

VERFAHREN ZUR HERSTELLUNG EINES POLYAMID- FORMTEILS

PROCEDE DE FABRICATION D'UN MOULAGE DE POLYAMIDE

(84) Designated Contracting States:
**AT BE CH DE DK ES FI FR GB GR IE IT LI LU MC NL PT SE**
Designated Extension States:
**AL LT LV RO SI**

(30) Priority: **16.07.1996 NL 1003609**

(43) Date of publication of application:
**06.05.1999 Bulletin 1999/18**

(73) Proprietor: **Dilaton International B.V.**
**2131 BB Hoofddorp (NL)**

(72) Inventors:
• **LAAN, Dirk**
  **NL-6834 BK Arnhem (NL)**
• **MERTENS, Marcel, Dion, Marie**
  **NL-6137 JK Sittard (NL)**

(74) Representative: **Ottevangers, Sietse Ulbe et al**
**Vereenigde,**
**Postbus 87930**
**2508 DH Den Haag (NL)**

(56) References cited:
DE-A- 2 801 990        US-A- 3 372 137
US-A- 3 386 943        US-A- 3 418 268

## Description

The invention relates to a process for the preparation of a polyamide moulding containing an inorganic filler by filling a mould with at least lactam, catalyst, activator and the inorganic filler and polymerizing the lactam under the influence of the activator and the catalyst at a temperature which lies above an initiation temperature.

A similar process is known from US 3,418,268. That patent specification describes a process for the preparation of a polyamide moulding in which 5 to 95% of an inorganic filler is present. For the preparation of the known moulding the filler is first mixed with liquid lactam. A bonding improver is added to this mixture, which is bound to the filler, so that a better bond between the filler and the polyamide is achieved and improved mechanical properties are obtained. Subsequently, at least activator and catalyst are added to the mixture and the whole is heated to a temperature which lies above an initiation temperature.
The heated mixture is then quickly brought into a preheated mould, where it polymerizes in a few minutes.

A drawback of this process already recognized in US 3,418,268 is that the viscosity of the as yet unpolymerized mixture of lactam, activator, catalyst and inorganic filler increases with increasing filler concentrations, which hinders a mould to be quickly filled with the said mixture.

The object of the invention is to provide a process which does not show the drawback mentioned.

This object according to the invention is achieved in that, as the mould is filled, the inorganic filler is added to the mould separately from the other ingredients. "The other ingredients" as used here and hereafter should be taken to include lactam, catalyst and activator.

In this way, the fast filling of the mould is not hindered by a high viscosity at high filler contents. Surprisingly, the moulding obtained was found to possess good mechanical properties.

Preferably the filler is added to the mould simultaneously with the other ingredients or lags the addition of the other ingredients by less than 60 seconds. When the filler is added with a certain lag, the filler is admittedly added to the mould in the desired ratio, however, the addition of the filler is only started when a proportion of the other ingredients is already present in the mould. Depending on the reactivity of the other ingredients, the addition of the filler may more or less lag the addition of the other ingredients. Generally, the addition of filler will lag the addition of the other ingredients by less than 60 seconds, preferably less than 30 seconds and most preferably less than 10 seconds. If the addition of the filler lags the addition of the other ingredients by more than 60 seconds localized polymerization may occur before the other ingredients have been completely mixed with the filler. This may lead to inhomogeneously filled mouldings. If the reaction starts due to a high mould temperature, this may lead to an upper part of the moulding with less filler present at the outside than in the centre. This is caused by the polymerization reaction during the settlement of the filler in the upper part of the mould having progressed further than during the preceding settlement of the filler in the lower part of the mould. According as the reaction has progressed further, the viscosity of the reactive ingredients becomes higher and the filler in them can settle less easily than in those places where the reaction has progressed somewhat less far, which may lead to the above mentioned inhomogeneously filled mouldings. If, however, the reaction starts as a result of the temperature of the other ingredients themselves, the temperature in the centre of the moulding, because of the heat of reaction and the lower heat discharge, will rise faster than the temperature at the wall, so that the viscosity, particularly in the centre, rises faster than at the wall, which again may lead to inhomogeneously filled mouldings. Those skilled in the art can readily establish from the reactivity of the other ingredients, to what extent the addition of the filler may lag the addition of the other ingredients. It has been found that, conversely, the addition of the other ingredients to the hot filler can lead to undesired localized polymerization. Thus, the simultaneous, or substantially simultaneous, addition of the filler contributes to homogeneous polymerization.

In the known process the polymerization is started by heating of the mixture of lactam, catalyst, activator and the inorganic filler to a temperature above the initiation temperature, which in US 3,418,268 lies above 200°C. Especially in mouldings with high filler contents, which possess a high viscosity, this often leads to inhomogeneous heating of the mixture and consequently to inhomogeneous polymerization. In the process according to the invention the filler and the other ingredients can be added to the mould directly at the initiation temperature. "Initiation temperature" in this specification means the temperature at which the polymerization starts at a chosen time after the mixing. The time chosen between the mixing and the start of the polymerization is usually the same as the time needed for filling the mould. Depending on this time, the initiation temperature can also vary somewhat. The initiation temperature can, however, readily be established by determining how long it takes, as a function of the temperature of a mixture of the other ingredients, for this mixture to become turbid. In this specification "the start of the reaction" means the moment at which turbidity occurs because of the polymer chains having reached a length at which they no longer dissolve in the other ingredients, mainly lactam. Depending on the type and quantity of the catalyst and activator used, this temperature generally lies between 80 and 250°C. More particularly this temperature lies between 130 and 150°C. Consequently, a further advantage of the process according to the invention is that the viscous mixture does not need to be heated to the initiation temperature. In the process according to the invention the temperature of the filler and those of the other ingredients can be chosen so that the mixture, on being added to the mould, has a temperature equal to or higher than the initiation temperature. Consequently, a holder (i.e. the mould as used the process according to the invention) in which the filler and the other ingredients are mixed does not need to be cooled down below the initiation temperature before the ingredients for a next moulding can be mixed herein, as with the known process (a mixing vessel). This time and energy saving measure is of economic advantage with respect to the process described in US 3,418,268.

In order to prevent the other ingredients from starting to react before the filler is added and has settled, the temperature of the other ingredients should preferably be below and the temperature of the filler should preferably be above the initiation temperature. By choosing the temperature of the other ingredients 10-40°C below the initiation temperature and adjusting the temperature of the filler above the initiation temperature in such a manner that the desired initiation temperature is reached on mixing of the filler with the other ingredients, there is less chance of a premature reaction with the other ingredients, which favours a homogeneous polymerization. The mixture of the other ingredients generally has a temperature above the melting point of lactam and below the initiation temperature, which may be 250°C.

The mixture of the other ingredients preferably has a temperature between 100 and 140°C as the mould is filled. A small temperature increase is then sufficient to start the reaction and at the same time the moulding is prevented from reaching too high a temperature because of the heat released in the reaction. Too high a temperature is disadvantageous as to the extent to which the polymerization progreses. place. According as the maximum temperature is higher during polymerization, the free-lactam content of the polyamide moulding proves to be higher, which is disadvantageous for the mechanical properties thereof. The optimum temperature, i.e. the one at which polymerization of the mixture is delayed just long enough for the mould to be filled with all ingredients, can readily be determined by those skilled in the art through experiment.

The choice of the filler temperature is dependent on the temperature of the other ingredients and the heat capacity of the filler. This temperature can lie between 120 and 300°C. Preferably, the filler has a temperature between 140 and 180°C. This ensures that the temperature of the other ingredients is just sufficiently increased to start the polymerization without the temperature rising too high during the reaction, which would otherwise result in the aforementioned high free-lactam content in the polyamide moulding. The optimum temperature depends on the filler content and the specific heat thereof and can readily be determined by those skilled in the art.

In order to ensure that the other ingredients are sufficiently heated by the filler for them to initiate the polymerization, the filler temperature at low filler contents needs to lie further above the temperature of the other ingredients than at high filler contents. According as the filler temperature is raised further above that of the other ingredients, the chances of localized polymerization during the addition of the filler increases. Consequently, a filler temperature which is raised less far above the final temperature needed to initiate the polymerization contributes to a homogeneous polymerization. Since in the case of higher filler contents the filler temperature may lie less far above the initiation temperature, a high filler content is, thus, favourable for attaining a homogeneous polymerization. Homogeneity in the distribution of the filler across the moulding is best obtained by a filler content such that the voids between the filler particles are just filled by the polyamide present. In these conditions the filler can completely settle in the other components without such settlement leading to depletion of filler in the upper layer. This situation is mostly reached with a high filler content. The process according to the invention is especially intended for the manufacture of building elements. These generally consist of an inorganic filler bonded by a binder, the filler generally being cheaper than the binder and therefore being used in as high a concentration as possible.

Hence, the quantity of inorganic filler is preferably more than 60 wt.% with respect to the total weight of the moulding. More preferably, the filler contents is 75 wt.%. Filler contents above 90 wt.% are most preferable. An upper limit for the filler content is set by the amount of polyamide needed to fill the volume between the filler particles. This volume strongly depends on the shape and the particle size distribution of the filler particles. Besides this, the maximum filler content is also determined by the density of the filler. A filler content of approx. 95 wt.% is an economic upper limit for most of the inorganic fillers. Any higher contents will cause the requirements as to the particle shape or the particle distribution to become too demanding and such a material will loose the advantage of a cheap filler.

Other than the above-mentioned elements of the process for the preparation of a polyamide moulding according to the invention, including e.g. the preparation, the composition and the storage of the other ingredients, may suitably be copied from a known process for the preparation of cast nylon.

The process according to the invention can be carried out with a known catalyst for cast nylon. Known catalysts for cast nylon are sodiumhydride, sodiumalkanolate, alkalilactamate and alkaline-earth bislactamate. Examples of these are sodiumcaprolactamate, potassiumcaprolactamate, magnesiumbiscaprolactamate and caprolactammagnesiumhalogenide. Preferably sodium-caprolactamate is used.

The process according to the invention can be carried out using a known activator for the polymerization of lactams with the usual concentrations (0.1.-2mol%). Suitable compounds which supply activator groups are (poly)isocyanates, lactam (terminated) polyisocyanates and polyacyllactams. The (poly)isocyanates may be aliphatic, araliphatic, cycloaliphatic and aromatic isocyanates. Examples of suitable isocyanates are hexamethylenediisocyanate (HDI), xylylenediisocyanate (XDI), isoforondiisocyanate (IPDI), toluenediisocyanate (TDI), MDI and hydrogenated TDI, XDI or MDI, modified MDI (e.g. with carbodiimide). Examples of polyisocyanates are biuretes and trimers of aliphatic diisocyanates like 1.4-butanediisocyanate, 1.5-hexanediisocyanate and 1.6-hexanediisocyanate, but araliphatic and aromatic diisocyanates are also suitable.

Lactam-terminated polyisocyanates can be prepared by reacting a lactam e.g. caprolactam, with a polyisocyanate. Preferably, caprolactam-blocked HDI (hexamethylenebiscarbamido-caprolactam) is used.

The polyacyllactam compounds can be prepared by reacting a polyacyl compound, e.g. a polyacylchloride compound, with lactam. Suitable polyacyllactam compounds are e.g. terephthaloylbiscaprolactam, adipoylbiscaprolactam, oxaloylbiscaprolactam, isophthaloybis-caprolactam or mixtures of two or more of these compounds.

Triazines, carbodiimide and cyanamide are also suitable compounds which supply activators. The process according to the invention can be carried out by dissolving the catalyst in a part of the lactam and the activator in the other part. The polyamide moulding can be obtained by the known process for cast nylon by filling the mould with the solutions so obtained, which may or may not be premixed, and adding the filler separately. If the activator is liquid at room temperature, it can also be stored separately in a non-heated storage vessel and during casting be metered into the stream of lactam, which contains the catalyst.

In the process according to the invention nylon block copolymers may be applied in place of a homopolymer. For the present purposes, nylon block copolymers are polymers with the general formula:

$$(A - B)_n$$

where A represents a polyamide segment and B an elastomer segment. A polyol or an elastomer modified with hydroxyl groups is reacted with a lactam-blocked cyclic trimer of a polyisocyanate according to the process described in EP-A-135233. The prepolymer so obtained can be converted into the nylon block copolymer with lactam and with the aid of the above-mentioned catalyst. Polyols which may be used are described in EP-A-613918.

An inorganic material is generally suitable as filler. Examples of such materials are minerals, metals, metal oxides, metal aluminates and metal silicates, silicon-containing materials such as glass fibres, quartz, sand, marble and clay as well as mixtures hereof. Preferably sand is used as filler. Surprisingly, dry, hot sand has been found to possess good free-flowing properties and because of this it behaves like a liquid in filling the mould, so that it is easy to add separately. Unlike crystalline fillers and fillers with an aspect ratio greater than 1, sand has the advantage that bridging occurs less easily during warm metering, which would otherwise result in an at least temporary interruption of the metering and in inhomogeneities in the moulding. A further advantage of the use of sand is that it is readily obtainable in different particle sizes. This facilitates selection of a particle size distribution whereby the voids between the filler particles are just filled by the polyamide. Given that in the process according to the invention the filler settles in the other ingredients which are still liquid, the maximum degree of filling is also the optimum degree of filling. The addition of less filler than the maximum quantity for a particular particle size distribution readily leads to an inhomogeneous distribution of the filler in the moulding.

If desired, there are additives used in the preparation of polyamide mouldings which are normally used in the preparation of nylon or nylon block copolymers. Examples of these are impact strength improvers, colorants, flame retardants, stabilizers or adhesion promoters. Preferably 0.2 - 1% by weight of an organosilane compound is used as bonding agent. This provides a better bond between the inorganic filler and the polyamide and, so, improved toughness of the moulding. Especially if sand is used as a filler better mechanical properties of the moulding are obtained by adding an organosilane compound. The best mechanical properties are obtained when the organosilane compound is bound to the sand before it is added to the mould separately from the other ingredients.

Suitable lactams for the process according to the invention are lactams with at least five ring atoms like e.g. $\alpha$-pyrrolidon, $\varepsilon$-caprolactam, c-substituted caprolactam, capryllactam, laurinolactam or mixtures of these lactams. $\varepsilon$-caprolactam is preferably used because the nylon 6 formed from it has the highest modulus of the polyamides, which, especially in combination with sand as a filler, leads to mouldings that are particularly suitable as building elements.

The invention is illustrated hereafter by some examples.

Experiment I

8.3 grammes of a 20 wt.% sodiumcaprolactamate solution in caprolactam and 158.4 grammes of caprolactam are passed into an Erlenmeyer flask and heated in an oil bath to 135°C (solution A). 5.6 grammes of an 80 wt.% solution of caprolactam blocked 1.6-hexamethylenediisocyanate in caprolactam together with 161.0 grammes of caprolactam were also heated to 135°C in a second Erlenmeyer flask (solution B). 1000 grammes of dry sand (Eurocol quartz sand 046) was heated separately to 180°C in a stainless steel jug. After the solutions A and B had been mixed, the mixture was quickly transferred into an aluminium sheet mould which had been preheated up to 155°C. Subsequently the heated sand was immediately poured into the mould. The moulding was demoulded after 15 minutes. The density of this polyamide moulding was 1932kg/m. The bending strength measured according to NEN 3835 of a 160x50x41mm sheet cut out of this moulding was 40.2N/mm$^2$. The compression strength was 92N/mm$^2$.

Comparative example A

8.3 grammes of a 20 wt.% sodiumcaprolactamate solution in caprolactam and 158.4 grammes of caprolactam were passed into an Erlenmeyer flask and heated in an oil bath to 135°C (solution A). 5.6 grammes of an 80 wt.% solution of caprolactam-blocked 1.6-hexamethylenediisocyanate in caprolactam, together with 161.0 grammes of caprolactam, were also heated to 135°C in a second Erlenmeyer flask. 1000 grammes of dry sand (Eurocol quartz sand 046) with a temperature of 180°C was added to this (solution B). Solutions A and B were mixed and the mixture was transferred into an aluminium sheet mould which had been preheated to 155°C.
The mixture, due to its high viscosity, could not be completely transferred into the mould before the caprolactam had polymerized.

**Claims**

1. Process for the preparation of a polyamide moulding containing an inorganic filler by filling a mould with at least lactam, catalyst, activator and the inorganic filler and polymerizing the lactam under the influence of the activator and the catalyst at a temperature which lies above an initiation temperature, characterized in that, as the mould is filled, the inorganic filler is added to the mould separately from the other ingredients.

2. Process according to claim 1 in which the filler is added to the mould simultaneously with the other ingredients or lags the addition of the other ingredients by less than 60 seconds.

3. Process according to claim 1 or 2, in which the temperature of the other ingredients lies under, and the temperature of the filler lies above, the initiation temperature.

4. Process according to any one of claims 1-3, in which the mixture of the other ingredients has a temperature between 100 and 140°C as the mould is filled.

5. Process according to any one of claims 1-4, in which the filler has a temperature between 140 and 180°C.

6. Process according to any one of claims 1-5, in which the quantity of inorganic filler is more than 60 wt%.

7. Process according to any one of the claims 1-6, in which sand is used as a filler.

8. Process according to any one of claims 1-7, in which the lactam is ε-caprolactam.

**Patentansprüche**

1. Verfahren zur Herstellung eines Polyamidformteils, das einen anorganischen Füllstoff enthält, durch Füllen eines Werkzeugs mit wenigstens einem Lactam, einem Katalysator, einem Aktivator und dem anorganischen Füllstoff und Polymerisation des Lactams unter dem Einfluss des Aktivators und des Katalysators bei einer Temperatur, die oberhalb einer Initiierungstemperatur liegt, dadurch gekennzeichnet, dass, wenn das Werkzeug gefüllt ist, der anorganische Füllstoff separat von den anderen Inhaltsstoffen zum Werkzeug gegeben wird.

2. Verfahren gemäß Anspruch 1, worin der Füllstoff gleichzeitig mit den anderen Inhaltsstoffen zu dem Werkzeug gegeben wird oder die Zugabe desselben weniger als 60 Sekunden nach der Zugabe der anderen Inhaltsstoffe erfolgt.

3. Verfahren gemäß Anspruch 1 oder Anspruch 2, worin die Temperatur der anderen Inhaltsstoffe unterhalb der Initiierungstemperatur liegt und die Temperatur des Füllstoffs über der Initiierungstemperatur liegt.

4. Verfahren gemäß irgendeinem der Ansprüche 1 bis 3, worin die Mischung der anderen Inhaltsstoffe eine Temperatur zwischen 100 und 140 °C hat, wenn das Werkzeug gefüllt ist.

5. Verfahren gemäß irgendeinem der Ansprüche 1 bis 4, worin der Füllstoff eine Temperatur zwischen 140 und 180 °C hat.

6. Verfahren gemäß irgendeinem der Ansprüche 1 bis 5, worin die Menge des anorganischen Füllstoffs mehr als 60 Gew.-% beträgt.

7. Verfahren gemäß irgendeinem der Ansprüche 1 bis 6, worin Sand als Füllstoff verwendet wird.

8. Verfahren gemäß irgendeinem der Ansprüche 1 bis 7, worin das Lactam ε-Caprolactam ist.

**Revendications**

1. Procédé pour la préparation d'un moulage de polyamide contenant une charge inorganique par remplissage d'un moule avec au moins un lactame, un catalyseur, un activateur et la charge inorganique et par polymérisation du lactame sous l'action de l'activateur et du catalyseur à une température qui est supérieure à une température d'initiation, caractérisé en ce que la charge inorganique est, lorsque le moule est rempli, ajoutée dans le moule séparément des autres ingrédients.

2. Procédé selon la revendication 1, dans lequel la charge est ajoutée dans le moule simultanément avec les autres ingrédients ou est retardée de l'addition des autres ingrédients de moins de 60 secondes.

3. Procédé selon la revendication 1 ou 2, dans lequel la température des autres ingrédients est inférieure à la température d'initiation et la température de la charge est supérieure à la température d'initiation.

4. Procédé selon l'une quelconque des revendications 1-3, dans lequel le mélange des autres ingrédients présente une température comprise entre 100 et 140°C lorsque le moule est rempli.

5. Procédé selon l'une quelconque des revendications 1-4, dans lequel la charge présente une température comprise entre 140 et 180°C.

6. Procédé selon l'une quelconque des revendications 1-5, dans lequel la quantité de charge inorganique est supérieure à 60% en poids.

7. Procédé selon l'une quelconque des revendications 1-6, dans lequel on utilise du sable comme charge.

8. Procédé selon l'une quelconque des revendications 1-7, dans lequel le lactame est l'ε-caprolactame.